# EUROPÄISCHE PATENTSCHRIFT

(11) **EP 4 107 052 B1**
(45) Veröffentlichungstag und Bekanntmachung des Hinweises auf die Patenterteilung: **10.09.2025**
(21) Anmeldenummer: 21702237.5
(22) Anmeldetag: 27.01.2021
(51) Int. Cl.: B62D 15/02, G08G 1/14, E04H 6/42

(54) **VERFAHREN ZUM BETREIBEN EINES PARKHAUSPARKSYSTEMS EINES PARKHAUSES**
METHOD FOR OPERATING A CAR PARK PARKING SYSTEM OF A CAR PARK
PROCÉDÉ D'EXPLOITATION D'UN SYSTÈME DE STATIONNEMENT D'UN PARC DE STATIONNEMENT

(30) Priorität: 20.02.2020 DE 102020001085
(43) Veröffentlichungstag der Anmeldung: 28.12.2022
(73) Patentinhaber: Mercedes-Benz Group AG, 70372 Stuttgart (DE)
(72) Erfinder: HUG, Tobias, 71106 Magstadt (DE)
(74) Vertreter: Novagraaf Group
(86) Internationale Anmeldenummer: PCT/EP2021/051792
(87) Internationale Veröffentlichungsnummer: WO 2021/164998

(56) Entgegenhaltungen:
- EP-A1- 3 495 588
- DE-A1- 102016 219 698

## Beschreibung

Parkhauses für eine Vielzahl von Kraftfahrzeugen **gemäß** Patentanspruch 1.

Aus dem Stand der Technik sind Parkhäuser bekannt, welche ein sogenanntes Automated Valet Parking ermöglichen, welches das autonome Ein- beziehungsweise Ausparken von Kraftfahrzeugen beschreibt. Dabei kann das Kraftfahrzeug beispielsweise an einer Übergabezone abgegeben werden und dann von dem Parkhausparksystem autonom eingeparkt werden. Die Abholung wird vom Nutzer über beispielsweise ein Remotebediengerät, zum Beispiel ein Smartphone, initiiert. Das Kraftfahrzeug wird dann autonom vom Parkplatz im Parkhaus an eine Übergabezone gefahren und kann vom Fahrer abgeholt werden. Das Parkhausparksystem sollte dabei ohne ein übergeordnetes Fahrzeug-Management-System in der Lage sein, das Kraftfahrzeug immer innerhalb kurzer Zeit zur Übergabezone zurückholen zu können. Um nun eine maximale Ausnutzung des zur Verfügung stehenden Parkraums in städtischen Gebieten mit einem solchen System zu erzielen, kann es sinnvoll sein, ein intelligentes Management-System einzusetzen, die eine möglichst genaue Abschätzung der Abholzeit der jeweiligen Kraftfahrzeuge erlauben.

Die DE 10 2015 201 205 schlägt ein Verfahren zur Optimierung einer Nutzung einer Parkfläche vor. Dabei wird Fahrzeugen, die auf der Parkfläche geparkt werden sollen, jeweils ein Stellplatz zugeteilt, wobei die Fahrzeuge ihren jeweils zugeteilten Stellplatz insbesondere autonom ansteuern. Ferner können Fahrzeuge einen Wechsel des Stellplatzes ausführen, um eine verbesserte Nutzung der verfügbaren Parkplätze oder eine schnellere Verfügbarkeit des Fahrzeugs zu ermöglichen, wodurch insgesamt eine optimierte Nutzung der Parkfläche erzielt wird. Es wird dabei zunächst eine verfügbare Reichweite der jeweiligen Fahrzeuge ermittelt, und die Zuteilung des jeweiligen Stellplatzes und/oder ein möglicher Wechsel des Stellplatzes werden von der verfügbaren Reichweite der einzelnen Fahrzeuge abhängig gemacht. Die verfügbare Reichweite eines Fahrzeugs wird insbesondere durch eine Restkraftstoffmenge oder einen Ladezustand des Fahrzeugs beschrieben.

Die DE 10 2013 222 071 A1 schlägt ein Parkraumverwaltungssystem für eine Valet-Parking-Funktion vor, in dem der Zeitpunkt des Einleitens des automatischen Ausparkvorgangs optimiert wird. Dazu wird abgeschätzt oder explizit vorgegeben, wann der Fahrer eines geparkten Fahrzeugs an einer vordefinierten Abholposition sein wird, sodass das erfindungsgemäße Parkraumverwaltungssystem dem abzuholenden Fahrzeug übermitteln kann, wann dieses den Ausparkvorgang zu starten hat, um rechtzeitig an der Abholposition zu sein. Das Parkraumverwaltungssystem weist dazu eine Recheneinheit auf, die einen optimierten Startzeitpunkt für das Einleiten des Ausparkvorgangs abhängig von einer vorgegebenen Abholzeit berechnet. Dabei können Ausparktrajektorien abhängig von der Position des zugewiesenen Parkplatzes und der Abholposition berücksichtigt werden. Damit kann die Zeitdauer berechnet werden, die das Fahrzeug für das Zurücklegen der Ausparktrajektorie von einem zugewiesenen Parkplatz zur Abholstation benötigt.

In der DE 10 2016 219 698 ist ein Parkraumverwaltungssystem vorgeschlagen, welches eine Recheneinheit umfasst. Das Parkraumverwaltungssystem ist eingerichtet, den Belegungszustand eines vorgegebenen Parkraums zu überwachen und auf eine mittels einer Kommunikationsverbindung empfangenen Einparkanfrage eines Benutzers dem Fahrzeug dieses Benutzers einen Parkplatz zuzuweisen und mittels der Kommunikationsverbindung Positionsdaten des zugewiesenen Parkplatzes an das Fahrzeug zu übermitteln. Erfindungsgemäß ist das Parkraumverwaltungssystem eingerichtet, zu einem Startzeitpunkt einen Ausparkvorgang des Fahrzeugs einzuleiten, wobei das Fahrzeug, insbesondere autonom oder ferngesteuert, zu einer vorgegebenen Abholposition bewegt und wobei der Startzeitpunkt abhängig von einer basierend auf einem Tagesprofil des Benutzers bestimmten Abholzeit durch die Recheneinheit berechnet wird.

Die US 2006/0212344 A1 offenbart ein System für ein automatisches Parksystem. Das System enthält ein Erfassungssteuersystem zum Erfassen eines Belegungszustands einer Fahrzeugparklücke, wobei das Erfassungssystem ein Echtzeit-Belegungsstatussignal für die Fahrzeugparklücke bereitstellt, wobei das Belegungsstatussignal einen belegten Modus und einen unbelegten Modus enthält. Ferner weist das System ein Kommunikationsuntersystem auf, das mit dem Erfassungsuntersystem gekoppelt ist, um das Belegungsstatussignal zu übertragen.

Ferner weist das System ein Verwaltungsuntersystem zum Empfangen des Belegungsstatussignals auf, wobei das Verwaltungsuntersystem bei einer Modusänderung des Belegungsstatussignals automatisch eine Parktransaktion für die Fahrzeugparklücke verarbeitet. Ein Verfahren umfasst das automatische Öffnen einer Parktransaktion bei der Erfassung einer Belegung eines Parkplatzes oder Bereichs und das automatische Schließen einer Parktransaktion bei der Erfassung einer Urlaubszeit eines Parkplatzes oder Bereichs. Zusätzliche Elemente können ein Autorisierungssystem und ein Benachrichtigungssystem umfassen. Zu den Methoden gehören identifizierte Parkmethoden zur automatischen Erkennung von Änderungen des Belegungsstatus eines oder mehrerer Parkplätze oder -bereiche und gegebenenfalls die automatische Initiierung/Schließung von Parktransaktionen als Reaktion auf entsprechend erkannte Änderungen mit jedem der einen oder mehreren Parkplätze verbundenen Belegungsstatussignale sowie Methoden zur Herstellung und Verwendung der offengelegten Systeme.

Die EP 3 495 588 A1 betrifft ein Verfahren zur Lagerung von Fahrzeugen in einem Parkhaus, wobei ein Fahrzeug zunächst vermessen wird, anschließend auf einer FTS-Palette passender Größe positioniert wird, die FTS-Palette mit dem Fahrzeug nachfolgend als Fahrzeug-Quader in einem Rechnersystem abgebildet wird, in dem sämtliche in dem Parkhaus befindlichen, auf FTS-Paletten gelagerten Fahrzeuge mit ihrem aktuellen Stellplatz in Form von Fahrzeug-Quadern hinterlegt sind, anschließend von dem Rechnersystem rechnerisch eine im Hinblick auf die Raumnutzung optimale Anordnung der vorhandenen Fahrzeug-Quader einer definierten Parkfläche des Parkhauses zuzüglich des neu hinzuzufügenden Fahrzeug-Quaders ermittelt wird, wonach alle Fahrzeuge der definierten Parkfläche über ihre FTS-Palette in die neu ermittelte Fahrzeuganordnung umgelagert werden.

Aufgabe der vorliegenden Erfindung ist es, ein Verfahren sowie ein Parkhausparksystem zu schaffen, mittels welchen eine verbesserte Parkhausauslastung des Parkhauses realisiert werden kann.

Diese Aufgabe wird durch ein Verfahren gemäß Patentanspruch 1 gelöst. Vorteilhafte Ausgestaltungsformen sind in den Unteransprüchen angegeben.

Ein Aspekt der Erfindung betrifft ein Verfahren zum Betreiben eines Parkhausparksystems eines Parkhauses für eine Vielzahl von Kraftfahrzeugen, bei welchem ein aktueller Belegungszustand des Parkhauses mittels einer elektronischen Recheneinrichtung des Parkhausparksystems bestimmt wird, und bei welchem in Abhängigkeit von dem bestimmten Belegungszustand einem zu parkenden Kraftfahrzeug ein Schnellzugriffsparkplatz aus einer Vielzahl von Parkplätzen des Parkhauses zugewiesen wird, wobei das zu parkende Kraftfahrzeug fahrerlos zu dem zugewiesenen Schnellzugriffsparkplatz verbracht wird.

Es ist vorgesehen, dass in Abhängigkeit von einem Entscheidungskriterium eine Informationsnachricht dem Nutzer des zu parkenden Kraftfahrzeugs mittels der elektronischen Recheneinrichtung übermittelt wird, wobei die Informationsnachricht einen durch die elektronische Recheneinrichtung bestimmten Abholzeitpunkt dem Nutzer vorschlägt, und nach einer Annahme des Abholzeitpunkts durch den Nutzer das Kraftfahrzeug von dem Schnellzugriffsparkplatz auf einen Dauerparkplatz fahrerlos verbracht wird.

Dadurch ist es ermöglicht, dass eine verbesserte Parkhausauslastung realisiert werden kann. Somit ist ein effizientes Fahrzeugmanagement für ein Automated Valet Parking System, welches dem Parkhausparksystem entspricht, vorgeschlagen, welches es ermöglicht, darüber hinaus für den Betreiber eine Planung durchzuführen, wann die einzelnen Kraftfahrzeuge vom Kunden wieder benötigt werden und weitere Parkplätze frei werden, wodurch insbesondere für den Parkhausbetreiber in Auslastungsspitzen zusätzlicher Parkraum zur Verfügung gestellt werden kann. Gleichzeitig wird es ermöglicht, für die Kunden ein Bonussystem anzubieten, wenn sie die Einwilligung, ihr Kraftfahrzeug definierte Zeit nicht zu benötigen beziehungsweise im Parkhaus zu belassen. Es wird durch den Ansatz möglich, ein Optimum für die Fahrzeugnutzer zu schaffen, durch zusätzliche Parkplätze beziehungsweise Boni, sowie für den Parkhausbetreiber eine verbesserte Auslastung des Parkhauses zu erzielen.

Mit anderen Worten ist insbesondere vorgeschlagen, ein Parkhaus, welches mit einem Automated Valet Parking System ausgerüstet ist, verfügt permanent über die Information, wie viele Parkplätze aktuell noch verfügbar sind. Es kann somit die Auslastung kontinuierlich überwacht werden. Wird beispielsweise zu einer Spitzenzeit, beispielsweise am Samstag, in einem Stadtzentrum eine bestimmte Anzahl freier Parkplätze unterschritten, dann können Nutzer, die ihr Fahrzeug aktuell im Parkhaus über das Automated Valet Parking System geparkt haben, vom System kontaktiert werden. Auf Basis der vom Automated Valet Parking System erfassten statistischen Daten bezüglich der verfügbaren Parkplätze über der Zeit, kann dem Kunden ein konkreter Vorschlag unterbreitet werden. Dabei wird dem Kunden eine bestimmte Zeit vorgeschlagen, die er sein Fahrzeug im Parkhaus belassen will, zum Beispiel bis Montag 10:00 Uhr. Dafür erhält der Kunde zum Beispiel einen Bonus in Form von Parkzeit oder einen Rabatt auf die Parkgebühr. Die Anzahl der angesprochenen Kunden wird je nach Annahme des Angebots durch die Kunden erhöht oder verringert. Die Kraftfahrzeuge der Kunden, die ein solches Angebot annehmen beziehungsweise eine bestimmte Parkzeit bestätigen, können nun vom System in einem weniger leicht zugänglichen Bereich geparkt werden.

Insbesondere ist es dadurch ermöglicht, dass mittels des Parkhausparksystems, insbesondere in Spitzenzeiten, zusätzlicher Parkraum für weitere Kunden durch eine Verdichtung der Parkplätze beziehungsweise des Parkraums angeboten werden kann und den Kunden über eine Incentifierung den Anreiz zu geben, dieses Angebot in Erwägung zu ziehen. Das Parkhausparksystem überwacht weiter die Auslastung des Parkhauses oder veranlasst nach Ablauf der mit dem Kunden vereinbarten Frist ein autonomes Umparken auf Standardparkplätze, die einen Rückruf der Kraftfahrzeuge durch die Kunden in wenigen Minuten ermöglichen.

Insbesondere kann vorgesehen sein, dass, sollte beispielsweise das Parkhaus bereits "überfüllt" sein, dem Nutzer direkt angeboten wird, das Kraftfahrzeug auf einen Dauerparkplatz zu verbringen und einen vorbestimmten Abholzeitpunkt dem Nutzer vorgeschlagen. Mit anderen Worten wird das Kraftfahrzeug nicht direkt auf einen zugewiesenen Schnellzugriffsparkplatz verbracht, sondern direkt auf einen Dauerparkplatz verbracht.

Insbesondere werden die Kraftfahrzeuge zumindest teilweise autonom, insbesondere vollautonom, auf die entsprechenden Parkplätze verbracht. Hierzu kann sowohl das Kraftfahrzeug autonom ausgebildet sein, es können aber auch beispielsweise Förderbänder und Fahrstühle innerhalb des Parkhauses verbaut werden, sodass eine autonome Bewegung des Kraftfahrzeugs mittels des Parkhauses initiiert werden kann.

Unter dem Begriff "zu parkenden Kraftfahrzeug" ist vorliegend das abgegebene Kraftfahrzeug durch den Nutzer zu verstehen. Das zu parkende Kraftfahrzeug kann somit sowohl bereits beispielsweise auf einem Schnellzugriffsparkplatz oder auf einem Dauerparkplatz geparkt sein, oder sich fahrerlos auf einen dieser Parkplätze bewegen. Der Begriff zu parkendes Kraftfahrzeug ist somit nicht auf ein fahrerlos zu bewegendes Kraftfahrzeug limitiert, sondern beschreibt lediglich das Kraftfahrzeugs, welches durch den Nutzer im Parkhaus abgegeben wurde.

Gemäß einer vorteilhaften Ausgestaltungsform wird bei einem Verbringen des zu parkenden Kraftfahrzeugs auf einen Dauerparkplatz das Kraftfahrzeug für eine Mindestparkdauer oberhalb eines vorgegebenen Parkdauerschwellwerts geparkt. Mit anderen Worten wird eine Mindestparkdauer vorgegeben, sodass dem Nutzer zuverlässig ein entsprechender Abholzeitpunkt vorgeschlagen wird. Dadurch ist es ermöglicht, dass zuverlässig zwischen dem Dauerparkplatz und dem Schnellzugriffsparkplatz unterschieden werden kann. Beispielsweise wird ein Kraftfahrzeug, welches unterhalb der Mindestparkdauer parkt, auf einen Schnellzugriffsparkplatz verbracht und es wird ein Kraftfahrzeug, welches oberhalb der Mindestparkdauer parkt, auf einen Dauerparkplatz verbracht. Somit kann verbessert die Auslastung des Parkhauses realisiert werden.

Weiterhin vorteilhaft ist, wenn bei einer gleich großen Fläche des Dauerparkplatzes gegenüber dem Schnellzugriffsparkplatz eine größere Anzahl von Kraftfahrzeugen und/oder ein größeres Kraftfahrzeug geparkt wird. Insbesondere kann vorgesehen sein, dass auf dem Dauerparkplatz ein verschachteltes Parken durchgeführt wird, was bedeutet, dass die Kraftfahrzeuge dicht an dicht von dem Parkhausparksystem geparkt werden, sodass kein manuelles Ausparken mehr möglich ist, da die Kraftfahrzeuge dicht an dicht stehen und beispielsweise der Nutzer die Fahrzeugtür nicht mehr weit genug öffnen könnte, um einzusteigen. Insbesondere kann somit nur ein fahrerloses Ein- bzw. Ausparten mittels des Parkhausparksystems realisiert werden. Insbesondere kann durch das verschachtelte Parken mehr Parkfläche zur Verfügung gestellt werden, sodass eine verbesserte Auslastung des Parkhauses realisiert werden kann.

Weiterhin vorteilhaft ist, wenn erst bei einer bestimmten Anzahl von geparkten Kraftfahrzeugen im Parkhaus oberhalb eines Anzahlschwellwerts der Abholzeitpunkt dem Nutzer vorgeschlagen wird. Insbesondere kann das Parkhaus beispielsweise eine entsprechende Erfassungseinrichtung aufweisen, mittels welcher die Anzahl der geparkten Kraftfahrzeuge überwacht werden kann. Erst beim Überschreiten des Anzahlschwellwerts, beispielsweise oberhalb einer Auslastung von 75 Prozent des Parkhauses, wird dann der Abholzeitpunkt dem Nutzer vorgeschlagen. Mit anderen Worten, sollte die Auslastung des Parkhauses gering sein, so wird das Kraftfahrzeug auf den Schnellzugriffsparkplatz verbracht, sodass eine Abholung des Kraftfahrzeugs durch den Nutzer zu jeder Zeit realisiert werden kann. Erst bei einem Überschreiten des Anzahlschwellwerts, wird das erfindungsgemäße Verfahren durchgeführt, sodass die Auslastung des Parkhauses verbessert durchgeführt werden kann.

Alternativ kann bei einer Unterschreitung eines Freiplatzschwellwerts das Verfahren durchgeführt werden. Mit anderen Worten wird eine Anzahl an freien Parkplätzen erfasst und bei dem Unterschreiten eines vorgegebenen Freiplatzschwellwerts kann das Verfahren durchgeführt werden.

Weiterhin wird von dem Nutzer zusätzlich eine Mindestparkdauer vorgegeben und in Abhängigkeit von der vorgegebenen Mindestparkdauer mittels der elektronischen Recheneinrichtung entschieden, ob das Kraftfahrzeug auf einen Schnellzugriffsparkplatz oder einen Dauerparkplatz verbracht wird. Beispielsweise kann der Kunde beim Parken des Kraftfahrzeugs in der Übergabezone entsprechend über ein mobiles Endgerät, beispielsweise ein Smartphone, eine Mindestparkdauer dem Parkhausparksystem vorgeben. In Abhängigkeit davon kann dann entschieden werden, sollte beispielsweise die Mindestparkdauer unterhalb eines vorgegebenen Schwellwerts sein, dass das Kraftfahrzeug auf einem Schnellzugriffsparkplatz geparkt wird. Sollte beispielsweise eine Parkdauer oberhalb eines vorgegebenen Schwellwerts sein, so kann von der elektronischen Recheneinrichtung entschieden werden, dass das Kraftfahrzeug auf einen Dauerparkplatz verbracht wird. Insbesondere kann der aktuelle Belegungszustand des Parkhauses dabei berücksichtigt werden. Dadurch ist eine verbesserte Auslastung des Parkhauses realisiert.

Gemäß einer weiteren vorteilhaften Ausgestaltungsform wird der Abholzeitpunkt auf Basis statistischer Daten bezüglich der verfügbaren Parkplätze in Abhängigkeit von der Zeit vorgeschlagen. Insbesondere kann beispielsweise vorgesehen sein, dass eine Durchschnittsparkdauer von Kraftfahrzeugen bestimmt wird und in Abhängigkeit von der bestimmten Durchschnittsparkdauer der Abholzeitpunkt dem Nutzer vorgeschlagen wird. Insbesondere können hierzu beispielsweise Stoßzeiten am Parkhaus mit berücksichtigt werden. Somit ist eine verbesserte Auslastung des Parkhauses, insbesondere zu Spitzenzeiten, ermöglicht.

Ebenfalls vorteilhaft ist, wenn die statistischen Daten auf Basis von vergangenen Belegungszuständen im Parkhaus mittels der elektronischen Recheneinrichtung bestimmt und ausgewertet werden. Insbesondere kann somit der vergangene Belegungszustand beziehungsweise die vergangenen Belegungszustände entsprechend in einer Speichereinrichtung der elektronischen Recheneinrichtung abgespeichert werden und entsprechend ausgewertet werden. Anhand dieser abgespeicherten Belegungszustände kann dann zuverlässig bestimmt werden, zu welchem Zeitpunkt dem Nutzer ein Abholzeitpunkt vorgeschlagen wird. Des Weiteren kann der Abholzeitpunkt zuverlässig bestimmt werden. Beispielsweise kann hierzu die elektronische Recheneinrichtung ein neuronales Netzwerk aufweisen, welches auf Basis der vergangenen Belegungszustände lernt, an welchen Tagen mit einer erhöhten Kundenanzahl zu rechnen ist, und ob beispielsweise sich die Parkdauer der Kunden im Laufe der Zeit erhöht. Somit können an die aktuelle Situation angepasst die statistischen Daten bestimmt werden, sodass der Abholzeitpunkt zuverlässig dem Nutzer vorgeschlagen werden kann.

In einer weiteren vorteilhaften Ausgestaltungsform wird zum Abholzeitpunkt das Kraftfahrzeug auf den Schnellzugriffsparkplatz verbracht. Insbesondere ist vorgesehen, dass zum Abholzeitpunkt das Kraftfahrzeug auf dem Schnellzugriffsparkplatz geparkt ist. Mit anderen Worten kann beispielsweise ein Verbringen des Kraftfahrzeugs bereits vor dem Abholzeitpunkt durchgeführt werden, sodass zumindest zum Abholzeitpunkt das Kraftfahrzeug auf dem Schnellzugriffsparkplatz für den Kunden zur Verfügung steht. Alternativ oder ergänzend kann das Kraftfahrzeug zum Abholzeit in einen Übergabebereich des Parkhauses gebracht werden.

Weiterhin vorteilhaft ist, wenn als Dauerparkplatz ein Dauerparkplatz des Parkhauses und/oder ein Dauerparkplatz extern zum Parkhaus genutzt wird. Mit anderen Worten kann beispielsweise ein Dauerparkplatz auf einem extern zum Parkhaus bereitgestellten weiteren Parkhaus genutzt werden, in dem beispielsweise nur Kraftfahrzeuge über das Automated Valet Parking System geparkt werden und dort verschachtelt geparkt werden, sodass die Kraftfahrzeuge dicht an dicht gestellt sind. Alternativ kann vorgesehen sein, dass das Parkhaus sowohl über Schnellzugriffsparkplätze als auch über Dauerparkplätze verfügt, sodass nur innerhalb des jeweiligen Parkhauses die Kraftfahrzeuge verbracht werden.

Ein nicht beanspruchtes Parkhausparksystem weist gegenständliche Merkmale auf, welche eine Durchführung des vorstehend beschriebenen Verfahrens oder eine vorteilhafte Ausgestaltungsform davon ermöglichen.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Draufsicht auf ein Parkhaus mit einer Ausführungsform eines Parkhausparksystems;
- Fig. 2: ein schematisches Flussdiagramm einer Ausführungsform eines Verfahrens gemäß der Erfindung; und
- Fig. 3: drei zeitabhängige Graphen, welche eine Ausführungsform des Verfahrens beschreiben.

In den Figuren sind gleiche oder funktionsgleiche Elemente mit gleichen Bezugszeichen versehen.

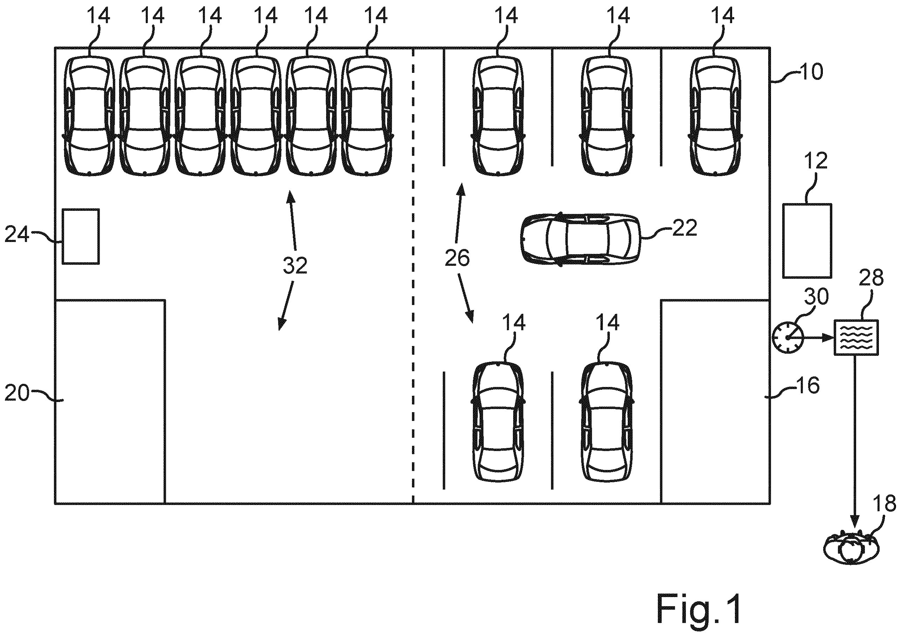

Fig. 1 zeigt in einer schematischen Draufsicht eine Ausführungsform eines Parkhauses 10 mit einer Ausführungsform eines Parkhausparksystems 12. Das Parkhaus 10 weist eine Vielzahl von Parkplätzen auf, wobei die Vielzahl von Parkplätzen für eine Vielzahl von Kraftfahrzeugen 14, 22 bereitgestellt ist. Das Parkhaus 10 ist als sogenanntes Automated Valet Parking Parkhaus ausgebildet. Mit anderen Worten findet ein fahrerloses Parken der Kraftfahrzeuge 14, 22 innerhalb des Parkhauses 10 statt. Insbesondere kann das Parkhaus 10 hierzu einen Übergabebereich 16 aufweisen, bei welchem ein Nutzer 18 das Kraftfahrzeug 14, 22 abgeben kann, wobei das Kraftfahrzeug 14, 22 dann auf einen der Parkplätze verbracht wird. Das Parkhaus 10 kann ferner einen Abholbereich 20 aufweisen, in welchem das Kraftfahrzeug 14, 22 von dem Nutzer 18 abgeholt werden kann.

Im vorliegenden Ausführungsbeispiel ist dem Nutzer 18 ein zu parkendes Kraftfahrzeug 22 zugewiesen. Mit anderen Worten ist der Nutzer 18 beispielsweise der Besitzer beziehungsweise Eigentümer des Kraftfahrzeugs 22, welches geparkt werden soll. Bei dem Kraftfahrzeug 22 handelt es sich somit um ein zu parkendes Kraftfahrzeug 22. Bei den Kraftfahrzeuge 14 handelt es sich um bereits geparkte Kraftfahrzeuge 14, welche unabhängig von dem Nutzer 18 geparkt wurden.

Beim Verfahren zum Betreiben des Parkhausparksystems 12 des Parkhauses 10 für die Vielzahl von Kraftfahrzeugen 14 wird ein aktueller Belegungszustand des Parkhauses 10 mittels einer elektronischen Recheneinrichtung 24 des Parkhausparksystems 12 bestimmt, und es wird in Abhängigkeit von dem bestimmten Belegungszustand dem zu parkenden Kraftfahrzeug 22 ein Schnellzugriffsparkplatz 26 aus einer Vielzahl von Parkplätzen des Parkhauses 10 zugewiesen, wobei das zu parkende Kraftfahrzeug 22 fahrerlos zu dem zugewiesenen Schnellzugriffsparkplatz 26 verbracht wird.

Es ist vorgesehen, dass in Abhängigkeit von einem Entscheidungskriterium eine Informationsnachricht 28 dem Nutzer 18 des zu parkenden Kraftfahrzeugs 22 mittels der elektronischen Recheneinrichtung 24 übermittelt wird, wobei die Informationsnachricht 28 einen durch die elektronische Recheneinrichtung 24 ermittelten Abholzeitpunkt 30 dem Nutzer 18 vorschlägt, und nach der Annahme des Abholzeitpunkts 30 durch den Nutzer 18 das zu parkende Kraftfahrzeug 22 von dem Schnellzugriffsparkplatz 26 auf einen Dauerparkplatz 32 fahrerlos verbracht wird.

Unter dem Begriff "zu parkenden Kraftfahrzeug 22" ist vorliegend das abgegebene Kraftfahrzeug 22 durch den Nutzer 18 zu verstehen. Das zu parkende Kraftfahrzeug 22 kann somit sowohl bereits beispielsweise auf einem Schnellzugriffsparkplatz 26 oder auf einem Dauerparkplatz 32 geparkt sein, oder sich fahrerlos auf einen dieser Parkplätze bewegen. Der Begriff zu parkendes Kraftfahrzeug 22 ist somit nicht auf ein fahrerlos zu bewegendes Kraftfahrzeug 22 limitiert, sondern beschreibt lediglich das Kraftfahrzeugs 22, welches durch den Nutzer 18 im Parkhaus abgegeben wurde. Vorliegend ist das zu parkende Kraftfahrzeug 22 nicht geparkt, sondern befindet sich in einem fahrerlosen Parkvorgang.

Insbesondere zeigt die Fig. 1, dass bei einer gleich großen Fläche des Dauerparkplatzes 32 gegenüber dem Schnellzugriffsparkplatz 26 eine größere Anzahl von Kraftfahrzeugen 14, 22 und/oder ein größeres Kraftfahrzeug 14, 22 geparkt wird. Mit anderen Worten ist vorgesehen, dass bei dem Dauerparkplatz 32 die Kraftfahrzeuge 14, 22 dicht an dicht geparkt werden. Ferner kann vorgesehen sein, dass als Dauerparkplatz 32 ein Dauerparkplatz 32 des Parkhauses 10 und/oder ein Dauerparkplatz 32 extern zum Parkhaus 10 genutzt wird.

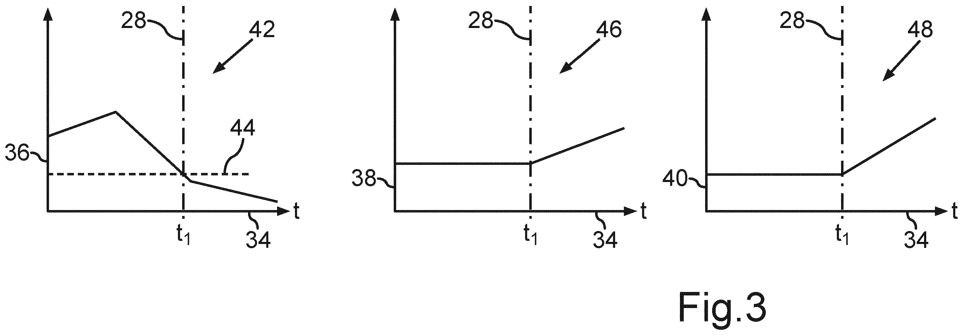

Ferner zeigt die Fig. 1, dass bei einem Verbringen des zu parkenden Kraftfahrzeugs 22 auf einen Dauerparkplatz 32 das zu parkende Kraftfahrzeug 22 für eine Mindestparkdauer oberhalb eines vorgegebenen Parkdauerschwellwerts geparkt wird. Des Weiteren kann vorgesehen sein, dass erst bei einer bestimmten Anzahl von geparkten Kraftfahrzeugen 14, 22 im Parkhaus 10 oberhalb eines Anzahlschwellwerts 44 (Fig. 3) der Abholzeitpunkt 30 dem Nutzer 18 vorgeschlagen wird. Der Abholzeitpunkt 30 kann beispielsweise auf Basis statistischer Daten bezüglich der verfügbaren Parkplätze in Abhängigkeit von der Zeit t (Fig. 3) vorgeschlagen werden. Insbesondere können die statistischen Daten auf Basis von vergangenen Belegungszuständen im Parkhaus 10 mittels der elektronischen Recheneinrichtung 24 bestimmt und ausgewertet werden. Des Weiteren kann insbesondere vorgesehen sein, dass zum Abholzeitpunkt 30 das zu parkende Kraftfahrzeug 22 auf den Schnellzugriffsparkplatz 26 verbracht wird. Insbesondere steht das zu parkende Kraftfahrzeug 22 zum Abholzeitpunkt 30 auf dem Schnellzugriffsparkplatz 26 für den Nutzer 18 zur Verfügung. Im vorliegenden Ausführungsbeispiel kann insbesondere vorgesehen sein, dass das Kraftfahrzeug 22 zum Abholzeitpunkt 30 im Abholbereich 20 bereitgestellt ist.

Ferner kann insbesondere vorgesehen sein, dass von den Nutzer 18 zusätzlich eine Mindestparkdauer vorgegeben wird und in Abhängigkeit von der vorgegebenen Mindestparkdauer mittels der elektronischen Recheneinrichtung 24 entschieden wird, ob das zu parkende Kraftfahrzeug 22 auf den Schnellzugriffsparkplatz 26 oder einen Dauerparkplatz 32 verbracht wird.

Insbesondere zeigt somit die Fig. 1 das Parkhausparksystem 12, welches eine maximale Ausnutzung des zur Verfügung stehenden Parkraums beispielsweise in einem städtischen Gebiet erzielt, wobei hierbei ein intelligentes Managementsystem eingesetzt ist, das eine möglichst genaue Abschätzung der Abholzeit 30 der jeweiligen Kraftfahrzeuge 14, 22 erlaubt.

Das Parkhaus 10, welches insbesondere als Automated Valet Parking Parkhaus ausgebildet ist, verfügt permanent über die Information, wie viele Parkplätze aktuell noch verfügbar sind, also über den Belegunszustand. Es wird somit die Auslastung kontinuierlich überwacht. Wird beispielsweise zu Spitzenzeiten, zum Beispiel an einem Samstag in einem Stadtzentrum, eine bestimmte Anzahl freier Parkplätze unterschritten, dann kann beispielsweise der Nutzer 18, der das zu parkende Kraftfahrzeug 22 aktuell im Parkhaus 10 über das Automated Valet Parking System geparkt haben möchte, vom System kontaktiert werden. Auf Basis der vom Automated Valet Parking System erfassten statistischen Daten bezüglich der verfügbaren Parkplätze über der Zeit t, kann dem Nutzer 18 ein konkreter Abholzeitpunkt 30 unterbreitet werden. Dabei wird dem Nutzer 18 eine bestimmte Zeit t vorgeschlagen, die er sein zu parkendes Kraftfahrzeug 22 im Parkhaus 10 belassen wird, zum Beispiel bis Montag, 10:00 Uhr. Dafür erhält der Nutzer 18 zum Beispiel einen Bonus in Form von Parkzeit oder einen Rabatt auf die Parkgebühr. Die Anzahl der angesprochenen Nutzer 18 wird je nach Annahme des Angebots durch den Nutzer 18 erhöht oder verringert. Die Kraftfahrzeuge 14, 22, die ein solches Angebot annehmen beziehungsweise eine bestimmte Parkzeit bestätigen, können nun vom Parkhausparksystem 12 in einem weniger leicht zugänglichen Bereich geparkt werden, insbesondere auf dem Dauerparkplatz 32. Dies kann zum Beispiel ein angrenzendes weiteres Parkhaus sein, in dem nur Kraftfahrzeuge 14, 22 über das Automated Valet Parking System geparkt werden und dort verschachtelt geparkt werden, was bedeutet, dass die Kraftfahrzeuge 14, 22 dicht an dicht vom Parkhausparksystem 12 geparkt werden, sodass kein manuelles Ausparken mehr möglich ist, da die Kraftfahrzeuge 14, 22 dicht an dicht stehen und ein Nutzer 18 die Fahrzeugtür nicht mehr weit genug öffnen kann, um einzusteigen.

Alternativ können die Kraftfahrzeuge 14, 22 auch ausgelagert werden in ein anderes, weiter entferntes Parkhaus. Dieses Vorgehen erhöht erheblich die Zeit, die vom Parkhausparksystem 12 benötigt wird, um das Kraftfahrzeug 14, 22 zur Übergabezone, welche dem Abholbereich 20 entspricht, zurückzurufen. Dies ist aber in diesem Fall akzeptabel, da der Nutzer 18 eine verbindliche Zusage über die bestimmte Abholzeit 30 des zu parkenden Kraftfahrzeugs 22 im Parkhaus 10 gegeben hat. Damit wird es für das Automated Valet Parking System ermöglicht, in Spitzenzeiten zusätzlichen Parkraum weiteren Kunden durch eine Verdichtung der Parkplätze beziehungsweise des Parkraums anzubieten und den Nutzer 18 über eine Incentifierung einen Anreiz zu geben, dieses Angebot in Erwägung zu ziehen. Das Parkhausparksystem 12 überwacht weiter die Auslastung des Parkraums und veranlasst nach Ablauf der mit dem Nutzer 18 vereinbarten Frist ein autonomes Umparken auf einen Schnellzugriffsparkplatz 26, die einen Rückruf des zu parkenden Kraftfahrzeugs 22 durch den Nutzer 18 in wenigen Minuten ermöglichen.

Zusätzlich kann vom Parkhausparksystem 12 bei Übergabe des Kraftfahrzeugs 14, 22 an das Automated Valet Parking System ein Zeitlimit hinterlegt werden, das das zu parkende Kraftfahrzeug 22 im Parkhaus 10 verbleibt.

Insbesondere kann durch das dynamische System und das dynamische Angebotskonzept an den Nutzer 18 mithilfe dieses Ansatzes es ermöglicht werden, ein flexibles Parksystem mittels Automated Valet Parking anzubieten, bei dem es nicht erforderlich ist, zwingend eine fixe Aufenthaltszeit bei Übergabe des Kraftfahrzeugs 14, 22 an das Parkhausparksystem 12 angeben zu müssen. Gleichzeitig kann auf Auslastungsspitzen in einer für alle gewinnbringenden Weise reagiert werden.

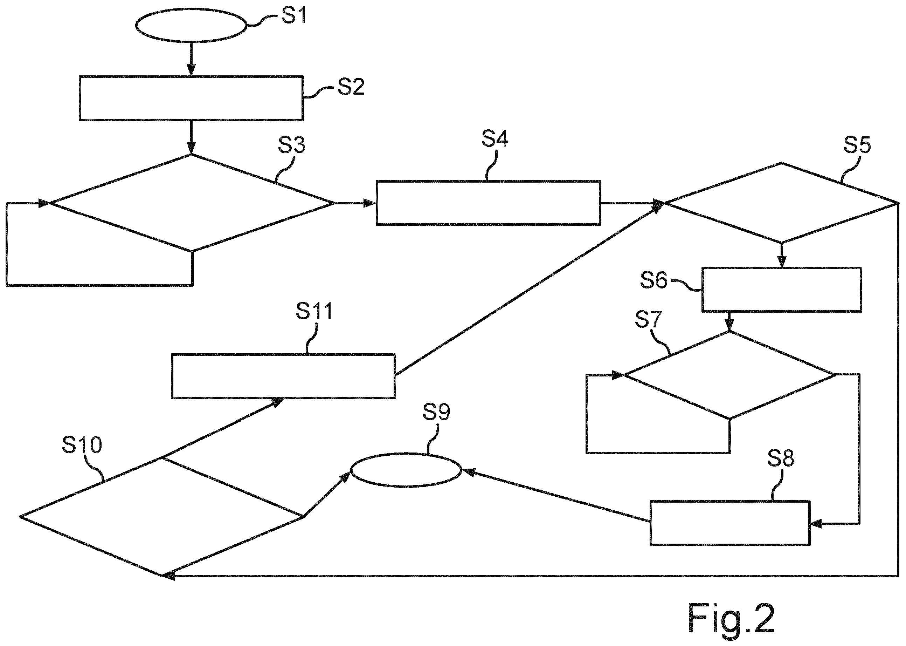

Fig. 2 zeigt ein schematisches Ablaufdiagramm einer Ausführungsform gemäß dem Verfahren. In einem ersten Schritt S1 beginnt das Verfahren. In einem zweiten Schritt S2 beginnt der Start des autonomen Parkhausparksystems 12. In einem dritten Schritt S3 wird überprüft, ob der Anzahlschwellwert 44 überschritten wird. Ist dies nicht der Fall, so verbleibt das Verfahren beim dritten Schritt S3. Wird der Anzahlschwellwert 44 überschritten, so wird in einem vierten Schritt S4 der Nutzer 18 kontaktiert. In einem fünften Schritt S5 wird überprüft, ob das Angebot vom Nutzer 18 akzeptiert wird. Sollte dies der Fall sein, so wird in einem sechsten Schritt S6 das zu parkende Kraftfahrzeug 22 umgeparkt. In einem siebten Schritt S7 wird überprüft, ob die Frist, mit anderen Worten der Abholzeitpunkt 30, abgelaufen ist. Sollte dies nicht der Fall sein, so wird im siebten Schritt S7 verblieben. Sollte dies der Fall sein, so wird in einem achten Schritt S8 das zu parkende Kraftfahrzeug 22 auf einen Schnellzugriffsparkplatz 26 verbracht. In einem neunten Schritt S9 wird das Verfahren beendet. Sollte ausgehend vom fünften Schritt S5 das Angebot durch den Nutzer 18 nicht akzeptiert worden sein, so wird in einem zehnten Schritt S10 überprüft, ob die Anzahl an angenommener Angebote von weiteren Nutzern ausreichend ist. Sollte dies der Fall sein, so wird in den neunten Schritt S9 übergegangen. Sollte dies nicht der Fall sein, so werden weitere Nutzer in einem elften Schritt S11 kontaktiert, wobei vom elften Schritt S11 dann wiederum in den fünften Schritt S5 übergegangen wird.

Fig. 3 zeigt eine schematische Ansicht von drei unterschiedlichen Graphen bezüglich eines Zeitverlaufs t. Auf der jeweiligen Abszisse 34 der drei Graphen ist die Zeit t aufgetragen. Auf einer ersten Ordinate 36 ist die Verfügbarkeit von Parkplätzen aufgetragen. Auf einer zweiten Ordinate 38 ist eine mittlere Fahrzeugrückholzeit aufgetragen. Auf einer dritten Ordinate 40 ist die Verdichtung von Parkraum angezeigt.

Ein erster Graph 42 zeigt somit, dass zu einem vorgegeben Zeitpunkt t1 die Anzahl verfügbarer Parkplätze unterhalb eines vorgegebenen Schwellwerts liegt. Mit anderen Worten liegt zum Zeitpunkt t1 die bestimmte Anzahl von geparkten Kraftfahrzeugen 14, 22 im Parkhaus 10 oberhalb des Anzahlschwellwerts 44. Zum Zeitpunkt t1 erfolgt insbesondere die Übertragung der Informationsnachricht 28 an den Nutzer 18.

Der zweite Graph 46 beschreibt insbesondere, dass zum Zeitpunkt t1, mit anderen Worten nach dem Aussenden der Informationsnachricht 28, die Anzahl der abgeholten Fahrzeuge steigt. Insbesondere steigt die mittlere Kraftfahrzeugrückholzeit zum Zeitpunkt t1 an. Insbesondere steigt die mittlere Rückholzeit, da eine Mindestparkdauer dem Nutzer 18 angeboten wird, weshalb die mittlere Parkdauer erhöht wird.

Im dritten Graphen 48 ist wiederum gezeigt, dass nach der Informationsnachricht 28 die Verdichtung des Parkraums zunimmt, da insbesondere die Kraftfahrzeuge 14, 22 auf den Dauerparkplatz 32 verbracht werden.

Insgesamt zeigen die Fig. 1 bis 3 ein autonomes Fahrzeugmanagement für Automated Valet Parking Systeme zur Optimierung der Auslastung und Parkraum.

## Patentansprüche

1. Verfahren zum Betreiben eines Parkhausparksystems (12) eines Parkhauses (10) für eine Vielzahl von Kraftfahrzeugen (14, 22), bei welchem ein aktueller Belegungszustand des Parkhauses (10) mittels einer elektronischen Recheneinrichtung (24) des Parkhausparksystems (12) bestimmt wird, und bei welchem in Abhängigkeit von dem bestimmten Belegungszustand einem zu parkenden Kraftfahrzeug (22) ein Schnellzugriffsparkplatz (26) aus einer Vielzahl von Parkplätzen des Parkhauses (10) zugewiesen wird, wobei das zu parkende Kraftfahrzeug (22) fahrerlos zu dem zugewiesenen Schnellzugriffsparkplatz (26) verbracht wird, wobei in Abhängigkeit von einem Entscheidungskriterium eine Informationsnachricht (28) einem Nutzer (18) des zu parkenden Kraftfahrzeugs (22) mittels der elektronischen Recheneinrichtung (24) übermittelt wird, wobei die Informationsnachricht (28) einen durch die elektronische Recheneinrichtung (24) bestimmten Abholzeitpunkt (30) dem Nutzer (18) vorschlägt, und nach einer Annahme des vorgeschlagenen Abholzeitpunkts (30) durch den Nutzer (18) das zu parkende Kraftfahrzeug (22) von dem Schnellzugriffsparkplatz (24) auf einen Dauerparkplatz (32) fahrerlos verbracht wird, wobei von dem Nutzer (18) zusätzlich eine Mindestparkdauer vorgegeben wird und in Abhängigkeit von der vorgegebenen Mindestparkdauer mittels der elektronischen Recheneinrichtung (24) entschieden wird, ob das zu parkende Kraftfahrzeug (22) auf einem Schnellzugriffsparkplatz (26) oder einen Dauerparkplatz (32) verbracht wird.

2. Verfahren nach Anspruch 1,
**dadurch gekennzeichnet, dass**
bei einem Verbringen des zu parkenden Kraftfahrzeugs (22) auf einen Dauerparkplatz (32) das zu parkende Kraftfahrzeug (22) für eine Mindestparkdauer oberhalb eines vorgegebenen Parkdauerschwellwerts geparkt wird.

3. Verfahren nach Anspruch 1 oder 2,
**dadurch gekennzeichnet, dass**
bei einer gleichgroßen Fläche des Dauerparkplatzes (32) gegenüber dem Schnellzugriffsparkplatz (26) eine größere Anzahl von Kraftfahrzeugen (14, 22) und/oder ein größeres Kraftfahrzeug (14, 22) geparkt wird.

4. Verfahren nach einem der vorhergehenden Ansprüche,
**dadurch gekennzeichnet, dass**
erst bei einer bestimmten Anzahl von geparkten Kraftfahrzeugen (14, 22) im Parkhaus (10) oberhalb eines Anzahlschwellwerts (44) der Abholzeitpunkt (30) dem Nutzer (18) vorgeschlagen wird.

5. Verfahren nach einem der vorhergehenden Ansprüche,
**dadurch gekennzeichnet, dass**
der Abholzeitpunkt (30) auf Basis statistischer Daten bezüglich der verfügbaren Parkplätze in Abhängigkeit von der Zeit (t) vorgeschlagen wird.

6. Verfahren nach Anspruch 5,
**dadurch gekennzeichnet, dass**
die statistischen Daten auf Basis von vergangenen Belegungszuständen im Parkhaus (10) mittels der elektronischen Recheneinrichtung (24) bestimmt und ausgewertet werden.

7. Verfahren nach einem der vorhergehenden Ansprüche,
**dadurch gekennzeichnet, dass**
zum Abholzeitpunkt (30) das zu parkende Kraftfahrzeug (22) auf den Schnellzugriffsparkplatz (26) verbracht wird.

8. Verfahren nach einem der vorhergehenden Ansprüche,
**dadurch gekennzeichnet, dass**
als Dauerparkplatz (32) ein Dauerparkplatz (32) des Parkhauses (10) und/oder ein Dauerparkplatz (32) extern zum Parkhaus (10) genutzt wird.

## Claims

1. Method for operating a parking garage parking system (12) of a parking garage (10) for a plurality of motor vehicles (14, 22), in which a current occupancy status of the parking garage (10) is determined by means of an electronic computing device (24) of the parking garage parking system (12), and in which, depending on the determined occupancy status, a motor vehicle (22) to be parked is assigned a quick-access parking space (26) from a plurality of parking spaces of the parking garage (10), wherein the motor vehicle (22) to be parked is moved driverlessly to the assigned quick-access parking space (26),
wherein
depending on a decision criterion, an information message (28) is transmitted to a user (18) of the motor vehicle (22) to be parked by means of the electronic computing device (24), wherein the information message (28) suggests to the user (18) a pick-up time (30) determined by the electronic computing device (24), and after acceptance of the suggested pick-up time (30) by the user (18), the motor vehicle (22) to be parked is moved driverlessly from the quick-access parking space (24) to a long-term parking space (32), wherein a minimum parking time is additionally specified by the user (18) and, depending on the specified minimum parking time, a decision is made by means of the electronic computing device (24) as to whether the motor vehicle (22) to be parked is moved to a quick-access parking space (26) or a long-term parking space (32).

2. Method according to claim 1,
**characterized in that**
when the motor vehicle (22) to be parked is moved to a long-term parking space (32), the motor vehicle (22) to be parked is parked for a minimum parking time above a specified parking time threshold.

3. Method according to either claim 1 or claim 2,
**characterized in that**
if the long-term parking space (32) has the same area as the quick-access parking space (26), a larger number of motor vehicles (14, 22) and/or a larger motor vehicle (14, 22) is parked.

4. Method according to any of the preceding claims,
**characterized in that**
the pick-up time (30) is only suggested to the user (18) when a certain number of parked motor vehicles (14, 22) in the parking garage (10) exceeds a number threshold (44).

5. Method according to any of the preceding claims,
**characterized in that**
the pick-up time (30) is suggested on the basis of statistical data regarding the available parking spaces depending on time (t).

6. Method according to claim 5,
**characterized in that**
the statistical data are determined and evaluated by means of the electronic computing device (24) on the basis of past occupancy statuses in the parking garage (10).

7. Method according to any of the preceding claims,
**characterized in that**
at the pick-up time (30) the motor vehicle (22) to be parked is moved to the quick-access parking space (26).

8. Method according to any of the preceding claims,
**characterized in that**
a long-term parking space (32) in the parking garage (10) and/or a long-term parking space (32) external to the parking garage (10) is used as a long-term parking space (32).

## Revendications

1. Procédé d'exploitation d'un système de parc de stationnement (12) d'un parc de stationnement (10) pour une pluralité de véhicules automobiles (14, 22), dans lequel un état d'occupation actuel du parc de stationnement (10) est déterminé au moyen d'un dispositif de calcul électronique (24) du système de parc de stationnement (12), et dans lequel, en fonction de l'état d'occupation déterminé, une place de stationnement à accès rapide (26) est attribuée à un véhicule automobile (22) à stationner parmi une pluralité de places de stationnement du parc de stationnement (10), dans lequel le véhicule automobile (22) à stationner est transféré sans conducteur à la place de stationnement à accès rapide (26) attribuée,
dans lequel
en fonction d'un critère de décision, un message d'information (28) est transmis à un utilisateur (18) du véhicule automobile (22) à stationner au moyen du dispositif de calcul électronique (24), dans lequel le message d'information (28) propose à l'utilisateur (18) un moment d'enlèvement (30) déterminé par le dispositif de calcul électronique (24), et après une acceptation par l'utilisateur (18) du moment d'enlèvement (30) proposé, le véhicule automobile (22) à stationner est transféré sans conducteur de la place de stationnement à accès rapide (24) à une place de stationnement permanente (32), dans lequel une durée de stationnement minimale est en outre prédéfinie par l'utilisateur (18) et, en fonction de la durée de stationnement minimale prédéfinie, il est décidé au moyen du dispositif de calcul électronique (24) si le véhicule automobile (22) à stationner est transféré sur une place de stationnement à accès rapide (26) ou sur une place de stationnement permanente (32).

2. Procédé selon la revendication 1,
**caractérisé en ce que**
lors d'un transfert du véhicule automobile (22) à stationner sur une place de stationnement permanent (32), le véhicule automobile (22) à stationner est stationné pendant une durée de stationnement minimale supérieure à une valeur seuil de durée de stationnement prédéfinie.

3. Procédé selon la revendication 1 ou 2,
**caractérisé en ce que**
pour une surface égale de la place de stationnement permanente (32) par rapport à la place de stationnement à accès rapide (26), un plus grand nombre de véhicules automobiles (14, 22) et/ou un plus grand véhicule automobile (14, 22) est stationné.

4. Procédé selon l'une des revendications précédentes,
**caractérisé en ce que**
le moment d'enlèvement (30) n'est proposé à l'utilisateur (18) qu'à partir d'un certain nombre de véhicules automobiles (14, 22) stationnés dans le parc de stationnement (10) supérieur à une valeur seuil de nombre (44).

5. Procédé selon l'une des revendications précédentes,
**caractérisé en ce que**
le moment d'enlèvement (30) est proposé sur la base de données statistiques concernant les places de stationnement disponibles en fonction du temps (t).

6. Procédé selon la revendication 5,
**caractérisé en ce que**
les données statistiques sont déterminées et évaluées sur la base d'états d'occupation passés dans le parc de stationnement (10) au moyen du dispositif de calcul électronique (24).

7. Procédé selon l'une des revendications précédentes,
**caractérisé en ce que**
au moment de l'enlèvement (30), le véhicule automobile (22) à stationner est transféré sur la place de stationnement à accès rapide (26).

8. Procédé selon l'une des revendications précédentes,
**caractérisé en ce que**
on utilise comme place de stationnement permanente (32) une place de stationnement permanente (32) du parc de stationnement (10) et/ou une place de stationnement permanente (32) externe au parc de stationnement (10).
